# EUROPEAN PATENT APPLICATION

(11) **EP 4 593 422 A1**
(43) Date of publication of application: **30.07.2025**
(21) Application number: 23935034.1
(22) Date of filing: 20.11.2023
(51) Int. Cl.: H04R 9/06

(54) **ELECTRONIC DEVICE**

(30) Priority: 28.04.2023 CN 202310486116
(71) Applicant: Honor Device Co., Ltd., Shenzhen, Guangdong 518040 (CN)
(72) Inventor: WANG, Chuanguo, Shenzhen, Guangdong 518040 (CN); HUANG, Jiaze, Shenzhen, Guangdong 518040 (CN); ZHOU, Guotong, Shenzhen, Guangdong 518040 (CN); ZHANG, Xueyu, Shenzhen, Guangdong 518040 (CN); WANG, Yuan, Shenzhen, Guangdong 518040 (CN)
(74) Representative: MERH-IP Matias Erny Reichl Hoffmann Patentanwälte PartG mbB
(86) International application number: PCT/CN2023/132666
(87) International publication number: WO 2024/221866

(57) **Abstract**

Embodiments of this application provide an electronic device. The electronic device is thin and has a good sealing effect. The electronic device includes a middle frame, where the middle frame includes an exterior member and a support member, and the exterior member is provided with a sound output hole; a display module and a rear cover, arranged on two sides of the support member respectively and defining an overall machine cavity with the exterior member; a speaker module, located in the overall machine cavity and located on a side of the support member, where the speaker module includes a side housing and a core dividing an area defined by the side housing into a front cavity and a rear cavity; and the side housing includes a first surface and a second surface, the side housing is provided with a sound output channel enabling the front cavity to communicate with the sound output hole, and the sound output channel provides a notch on the second surface; a sealing support, located at a gap between the exterior member and the side housing and exposing the sound output channel; and a first annular sealing member, located between the second surface of the side housing and the support member and between the sealing support and the support member. The front cavity is defined by at least the core, an inner surface, the support member, the sealing support, and the first annular sealing member.

## Description

This application claims priority to Chinese Patent Application No. 202310486116.X, filed with the China National Intellectual Property Administration on April 28, 2023 and entitled "ELECTRONIC DEVICE", which is incorporated herein by reference in its entirety.

### TECHNICAL FIELD

This application relates to the field of electronic device technologies, and in particular, to an electronic device including a speaker module.

### BACKGROUND

A speaker module is configured to restore an audio electrical signal such as music or speech into a sound, can support a function of external audio playback, and is widely used in an electronic device such as a mobile phone, a tablet computer, or a notebook computer.

However, the speaker module is thick, which is contrary to an ultra-thinning requirement of the electronic device. Therefore, how to implement an ultra-thinning design of an overall machine by reducing the thickness of the speaker module is an urgent technical problem to be resolved.

### SUMMARY

To resolve the foregoing technical problem, this application provides an electronic device. Therefore, a lightening and thinning design of the electronic device is implemented, and the electronic device has a good sealing effect.

Embodiments of this application provide an electronic device. The electronic device includes a middle frame, a display module, a rear cover, a speaker module, a sealing support, and a first annular sealing member. The middle frame includes an exterior member and a support member, the exterior member is annular, the support member is located in the exterior member, and the exterior member is provided with a sound output hole. The support member is located between the display module and the rear cover, and the display module, the exterior member of the middle frame, and the rear cover define an overall machine complete cavity. The speaker module is located in the overall machine cavity and located on a side of the support member along a first direction. The speaker module includes a side housing and a core, the side housing is annular, and the core is located in the side housing and divides an area defined by the side housing into a front cavity and a rear cavity. Along the first direction, the side housing includes a first surface and a second surface opposite to each other. The side housing further includes an outer surface and an inner surface that connect the first surface to the second surface. The side housing is provided with a sound output channel. The sound output channel runs through the outer surface and the inner surface, and extends to the second surface along the first direction, and the sound output channel enables the front cavity to communicate with the sound output hole. The sealing support is located at a gap between the exterior member and the side housing. The sealing support is annular, to expose the sound output hole and the sound output channel. The first annular sealing member is located between the second surface of the side housing and the support member and between the sealing support and the support member. An area defined by the core, the inner surface of the side housing, the support member, the sealing support, and the first annular sealing member forms the front cavity. The first direction is perpendicular to a plane on which the support member is located.

Because the sound output channel is provided on the side housing and extends to the second surface of the side housing, when only the first annular sealing member is arranged between the second surface of the side housing and the support member, gas in the front cavity is transmitted to a gap between the sealing support and the support member through the sound output channel, and then transmitted to the overall machine cavity through the gap between the sealing support and the support member, resulting in problems such as vibration of the display module, high-frequency dropping, and poor waterproofness of an overall machine. In embodiments of this application, the first annular sealing member is arranged between the second surface of the side housing and the support member, and the first annular sealing member extends to the gap between the sealing support and the support member, to seal the gap between the sealing support and the support member. In this way, an open front cavity is implemented (which is beneficial to reducing the thickness of the electronic device), and a sealing effect of the front cavity can be ensured.

For example, the first direction is a direction in which the display module points to the rear cover, that is, a thickness direction of the electronic device, that is, a Z-axis direction in embodiments.

For example, when the electronic device is a mobile phone, a tablet computer, a notebook computer, an in-vehicle computer, a smart wearable device, or the like, the rear cover is, for example, a battery cover.

For example, the electronic device may be a tablet electronic device, or may be a foldable electronic device. When the electronic device is the foldable electronic device, the display module may be a flexible screen, and the rear cover may be an outer screen.

In some possible implementations, the sealing support includes a support portion and a sealing portion, the support portion and the sealing portion are both annular, and the sealing portion is fixed to a side of the support portion facing away from the exterior member. A structure of the sealing support is simple, which is beneficial for assembly of the sealing support, and ensures a sealing effect at the gap between the side housing and the exterior member.

In some possible implementations, based on that the sealing support includes the support portion and the sealing portion, the electronic device further includes a blocking structure located in a slot defined by the support portion, the side housing, the sealing portion, and the first annular sealing member.

Because the annular sealing portion has a specific thickness in a direction facing away from the support portion (that is, a Y-axis direction in embodiments), a slot exists between the support portion, the side housing, the sealing portion, and the first annular sealing member. To prevent the gas in the front cavity from leaking into the overall machine cavity through the slot, the blocking structure is arranged in the slot defined by the support portion, the side housing, the sealing portion, and the first annular sealing member, and the blocking structure is used to block the gas in the front cavity from being transmitted to the overall machine cavity through the slot. Therefore, the sealing effect is further ensured.

In some possible implementations, based on that the electronic device further includes the blocking structure, when the sealing support includes the support portion and the sealing portion, the blocking structure and the sealing portion are integrally formed. In other words, when the sealing portion is prepared, the blocking structure is prepared. There is no need to separately prepare the blocking structure. Therefore, process steps are simplified, and costs are reduced. In addition, it can be further ensured that there is no gap between the blocking structure and the annular sealing portion, so that the sealing effect is further ensured.

Certainly, the blocking structure and the sealing portion may alternatively be formed separately.

In some possible implementations, based on that the electronic device further includes the blocking structure, the blocking structure is strip-shaped, and along the first direction, two opposite ends of the strip-shaped blocking structure are in contact with the sealing portion and the first annular sealing member respectively; and along a second direction, two opposite surfaces of the strip-shaped blocking structure are in contact with the side housing and the support portion respectively, and the second direction is perpendicular to the first direction. The blocking structure is structurally simple.

For example, the second direction is the Y-axis direction in embodiments.

In some possible implementations, based on that the electronic device further includes the blocking structure, the sealing portion has an opening, the sealing portion includes a first end portion and a second end portion located on two sides of the opening, and the blocking structure is located between the first end portion and the first annular sealing member and between the second end portion and the first annular sealing member. In this way, a structure of the sealing portion is simple, materials can be saved, and costs can be reduced.

For example, the sealing portion and the blocking structure are in a "U" shape.

In some possible implementations, based on that the electronic device further includes the blocking structure, a width of the blocking structure along a third direction is greater than or equal to 0.6 mm and less than or equal to 2 mm. The third direction is perpendicular to the first direction. In this arrangement, neither sealing is not facilitated because the width of the blocking structure is small nor the overall machine cavity is occupied because the width of the blocking structure is large.

For example, the third direction is an X-axis direction in embodiments.

For example, the width of the blocking structure along the third direction is 0.6 mm, 0.8 mm, 1 mm, 1.2 mm, 1.4 mm, 1.6 mm, 1.8 mm, 2 mm, or the like.

In some possible implementations, based on that the electronic device further includes the blocking structure, the blocking structure includes a material that can achieve the sealing effect, such as dispensed adhesive or flexible adhesive.

In some possible implementations, based on that the electronic device further includes the blocking structure, when the blocking structure includes the flexible adhesive, the blocking structure forms compressive interference with the support portion, the side housing, the sealing portion, and the first annular sealing member when being located in a slot defined by the support portion, the side housing, the sealing portion, and the first annular sealing member, to further ensure the sealing effect, and prevent air in the front cavity from leaking through a gap between the blocking structure and the support portion, a gap between the blocking structure and the side housing, a gap between the blocking structure and the sealing portion, and a gap between the blocking structure and the first annular sealing member.

In some possible implementations, based on that the electronic device further includes the blocking structure, an area at which the blocking structure is connected to the first annular sealing member is provided with an auxiliary structure, the auxiliary structure is configured to block the area at which the blocking structure is connected to the first annular sealing member, and the area at which the blocking structure is connected to the first annular sealing member is sealed through the auxiliary structure, to prevent the air in the front cavity from leaking through the gap between the blocking structure and the first annular sealing member.

In some possible implementations, based on that the auxiliary structure is arranged at the area at which the blocking structure is connected to the first annular sealing member, the auxiliary structure includes a weakly viscous adhesive such as silica gel or UV adhesive.

In some possible implementations, based on that the auxiliary structure is arranged at the area at which the blocking structure is connected to the first annular sealing member, the auxiliary structure is formed through an adhesive dispensing process, so that the structure is simple, and the sealing effect is good.

In some possible implementations, based on that the auxiliary structure is arranged at the area at which the blocking structure is connected to the first annular sealing member, the auxiliary structure is located outside the front cavity. In this way, arrangement of the auxiliary structure is facilitated, that is, after the speaker module and the first annular sealing member are assembled, the auxiliary structure is directly arranged at the area at which the blocking structure is connected to the first annular sealing member. Therefore, an arrangement manner is simple, and process difficulty is reduced.

In some possible implementations, the support member is provided with a support hole, an orthographic projection of the support hole on a plane on which the support member is located overlaps with an orthographic projection of the core on the plane on which the support member is located, the electronic device further includes a second annular sealing member, and the second annular sealing member is located between the support member and the display module, and is arranged around an edge of the support hole. The arrangement of the support hole can further increase a volume of the front cavity. In this way, when the volume of the front cavity is ensured, the core can be further moved downward, a size of the side housing along the first direction is reduced, the rear cover can be further moved downward, and a distance between the display module and the rear cover is shortened. Therefore, a lightening and thinning design of the electronic device is facilitated.

For example, the plane on which the support member is located is a plane formed by the X-axis and the Y-axis in embodiments.

In some possible implementations, based on that the support member is provided with a support hole, an orthographic projection of the support hole on a plane on which the support member is located overlaps with an orthographic projection of the core on the plane on which the support member is located, the electronic device further includes a second annular sealing member, and the second annular sealing member is located between the support member and the display module, and is arranged around an edge of the support hole, the display module is arranged on the support member through an adhesive layer, and the adhesive layer is the second annular sealing member. In this way, there is no need to separately arrange the second annular sealing member, so that the structure is simplified, and costs are reduced.

In some possible implementations, the rear cavity is in communication with the overall machine cavity, to increase a volume of the rear cavity, that is, the overall machine cavity of the entire electronic device is used as the rear cavity of the speaker module. In this way, a better audio effect can be achieved in limited architectural space of the electronic device.

In some possible implementations, the first annular sealing member includes a first edge and a second edge, the second edge is arranged around the first edge, a distance between the first edge and the second edge is W1, and 0.8 mm≤W1≤2 mm. In other words, a width of the first annular sealing member is between 0.8 mm and 2 mm. In this arrangement, neither a sealing effect is achieved because the width of the first annular sealing member is small nor much space of the overall machine cavity is occupied because the width of the first annular sealing member is large.

For example, the distance W1 between the first edge and the second edge is 0.8 mm, 1 mm, 1.2 mm, 1.4 mm, 1.6 mm, 1.8 mm, 2 mm, or the like.

In some possible implementations, the first annular sealing member includes foam, foam adhesive, glue, back adhesive, or the like.

### BRIEF DESCRIPTION OF DRAWINGS

FIG. 1 is a schematic diagram of a structure of an electronic device according to an embodiment of this application;
FIG. 2 is an exploded view of the electronic device shown in FIG. 1;
FIG. 3 is a schematic diagram of a structure of a speaker module according to an embodiment of this application;
FIG. 4 is a sectional view of the speaker module shown in FIG. 3 along a direction AA';
FIG. 5 is a schematic diagram of a structure of another speaker module according to an embodiment of this application;
FIG. 6 is a sectional view of the speaker module shown in FIG. 5 along a direction BB';
FIG. 7 is a sectional view of the electronic device shown in FIG. 1 along a direction CC';
FIG. 8 is a diagram of a positional relationship between an exterior member and a sealing support;
FIG. 9 is a sectional view of the electronic device shown in FIG. 1 along a direction DD';
FIG. 10 is another sectional view of the electronic device shown in FIG. 1 along a direction DD';
FIG. 11 is a diagram of a positional relationship between a support member and a sealing member according to an embodiment of this application;
FIG. 12 is another sectional view of the electronic device shown in FIG. 1 along a direction DD';
FIG. 13 is a schematic diagram of a structure of still another speaker module according to an embodiment of this application;
FIG. 14 is another sectional view of the electronic device shown in FIG. 1 along a direction DD';
FIG. 15 is a comparison diagram of a positional relationship between a speaker module, a sealing support, and a first annular sealing member;
FIG. 16 is a diagram of a positional relationship between a middle frame, a sealing support, a speaker module, and a display module according to an embodiment of this application;
FIG. 17 is a partial enlarged view of an area SS in FIG. 16;
FIG. 18 is a diagram of a positional relationship between a second side wall, a fourth portion of a first annular sealing member, and a sealing support according to an embodiment of this application;
FIG. 19 is a diagram of another positional relationship between a middle frame, a sealing support, a speaker module, and a display module according to an embodiment of this application;
FIG. 20 is a partial enlarged view of an area VV in FIG. 19;
FIG. 21 is a diagram of another positional relationship between a blocking structure, a second side wall, a fourth portion of a first annular sealing member, and a sealing support according to an embodiment of this application;
FIG. 22 is a diagram of a positional relationship between a blocking structure, a second side wall, a fourth portion of a first annular sealing member, a sealing portion, and an auxiliary structure according to an embodiment of this application;
FIG. 23 is an enlarged view of an area UU in FIG. 22;
FIG. 24 is a diagram of another positional relationship between a blocking structure, a second side wall, a fourth portion of a first annular sealing member, a sealing portion, and an auxiliary structure according to an embodiment of this application; and
FIG. 25 is a diagram of still another positional relationship between a blocking structure, a second side wall, a fourth portion of a first annular sealing member, a sealing portion, and an auxiliary structure according to an embodiment of this application.

### Reference numerals:

10-display module; 11-cover plate; 12-display; 20-rear cover; 30-middle frame; 300-sound output hole; 40-main board; 50-auxiliary board; 60-flexible circuit board; 70-battery; 80-speaker module; 81-sound output channel; 82-housing; 83-core; 90-first annular sealing member; 100-mobile phone; 110-blocking structure; 120-auxiliary structure;
821-front housing; 8211-front cavity wall; 8212-annular front cavity step; 822-rear housing; 8221-hollowed-out portion; 823-side housing; 8231-first side wall; 8232-second side wall; 823a-first surface; 823b-second surface;
33-sealing support; 331-support portion; 332-sealing portion; 3321-first sealing sub-portion; 3322-second sealing sub-portion; 3323-third sealing sub-portion; 3324-fourth sealing sub-portion; 3325-first end portion; 3326-second end portion;
91-first portion; 92-second portion; 93-third portion; 94-fourth portion.

### DESCRIPTION OF EMBODIMENTS

The following clearly and completely describes the technical solutions in embodiments of this application with reference to the accompanying drawings in embodiments of this application. It is clear that described embodiments are only some of embodiments of this application rather than all of embodiments. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects, but do not indicate a particular order of the objects. For example, a first target object, a second target object, and the like are intended to distinguish between different target objects, but do not indicate a particular order of the target objects.

In embodiments of this application, the word "exemplary" or "for example" is used to represent giving an example, an illustration, or a description. Any embodiment or design scheme described by using "exemplary" or "for example" in embodiments of this application should not be explained as being more preferred or having more advantages than another embodiment or design scheme. In particular, the terms such as "exemplary" and "example" as used herein are intended to present the related concept in a specific implementation.

In the description of embodiments of this application, unless otherwise stated, "a plurality of" means two or more. For example, a plurality of processing units means two or more processing units, and a plurality of systems means two or more systems.

Embodiments of this application provide an electronic device. The electronic device provided in embodiments of this application may be a device including a speaker module, such as a mobile phone, a tablet computer, a notebook computer, a personal digital assistant (personal digital assistant, PDA for short), an in-vehicle computer, a television, a smart wearable device (such as a smart watch, a smart bracelet, a smart head-mounted display, or smart glasses), or a smart home device. A specific form of the electronic device is not specially limited in embodiments of this application. For ease of description, an example in which the electronic device is a mobile phone is used below for description.

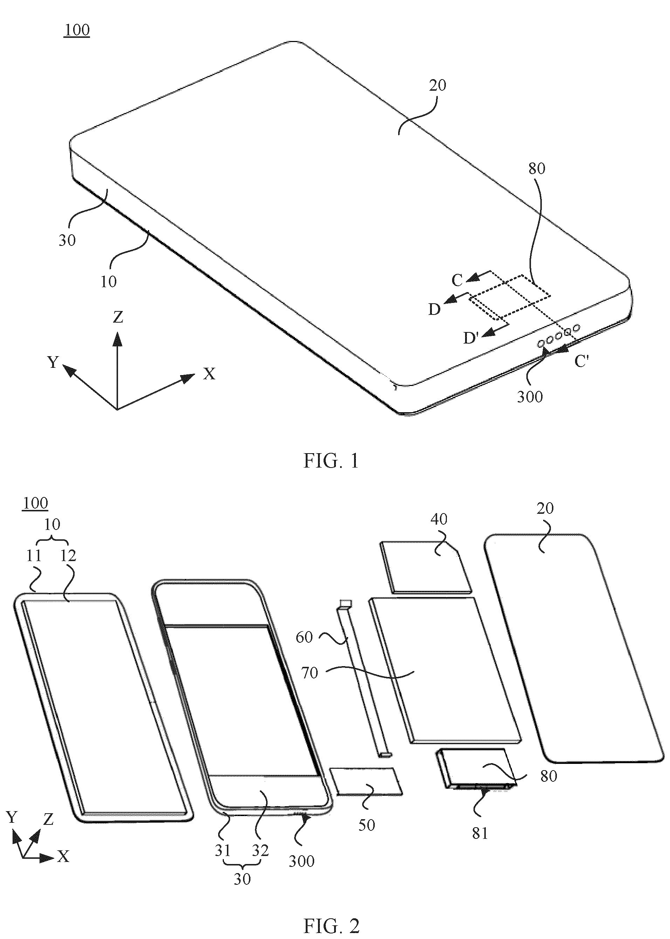

Refer to FIG. 1 and FIG. 2. FIG. 1 is a schematic diagram of a structure of an electronic device according to an embodiment of this application. FIG. 2 is an exploded view of the electronic device shown in FIG. 1. As shown in FIG. 1 and FIG. 2, a mobile phone 100 includes structures such as a display module 10, a rear cover (also referred to as a battery cover) 20, a middle frame 30, a main board 40, an auxiliary board 50, a flexible circuit board (Flexible Printed Circuit, FPC) 60 connecting the main board 40 to the auxiliary board 50, a battery 70, and at least one speaker module 80.

It may be understood that, FIG. 1, FIG. 2, and the following related drawings only schematically show some components included in the mobile phone 100, and actual shapes, actual sizes, actual positions, and actual structures of the components are not limited in FIG. 1, FIG. 2, and the following drawings. In addition, when the electronic device is a device in some other forms, the electronic device 100 may not include at least one of the display module 10, the rear cover 20, the middle frame 30, the auxiliary board 50, the FPC 60, and the battery 70.

In FIG. 1 and FIG. 2, the mobile phone 100 is in a shape of a rectangular tablet. To facilitate clear description of subsequent structural features and positional relationships between the structural features, an X-axis direction, a Y-axis direction, and a Z-axis direction are used to define a positional relationship between structures within the mobile phone. The X-axis direction is a width direction of the mobile phone, the Y-axis direction is a length direction of the mobile phone, and the Z-axis direction is a thickness direction of the mobile phone. It may be understood that, a coordinate system (that is, an X-axis, a Y-axis, and a Z-axis) of the electronic device may be flexibly set based on an actual requirement. This is not specifically limited herein. In other optional embodiments, the electronic device may alternatively be in a shape of a square tablet, a circular tablet, an elliptical tablet, or the like. Certainly, the electronic device may alternatively be a foldable electronic device, or the like.

Still refer to FIG. 2. The display module 10 includes a cover plate 11 and a display 12 that are stacked along the Z-axis direction. The cover plate 11 protects, for example, the display 12. The display 12 includes, for example, a liquid crystal display (Liquid Crystal Display, LCD), an organic light emitting diode (Organic Light Emitting Diode, OLED) display, and an LED display. The LED display includes, for example, a micro-LED display, and a mini-LED display. A type of the display 12 is not limited in embodiments of this application.

Along the Z-axis direction, the rear cover 20 is located on a side of the display 12 facing away from the cover plate 11. A material of the rear cover 20 may include, for example, an opaque material such as plastic, plain leather, or glass fiber, and a transparent material such as glass. A material of the rear cover 20 is not limited in embodiments of this application.

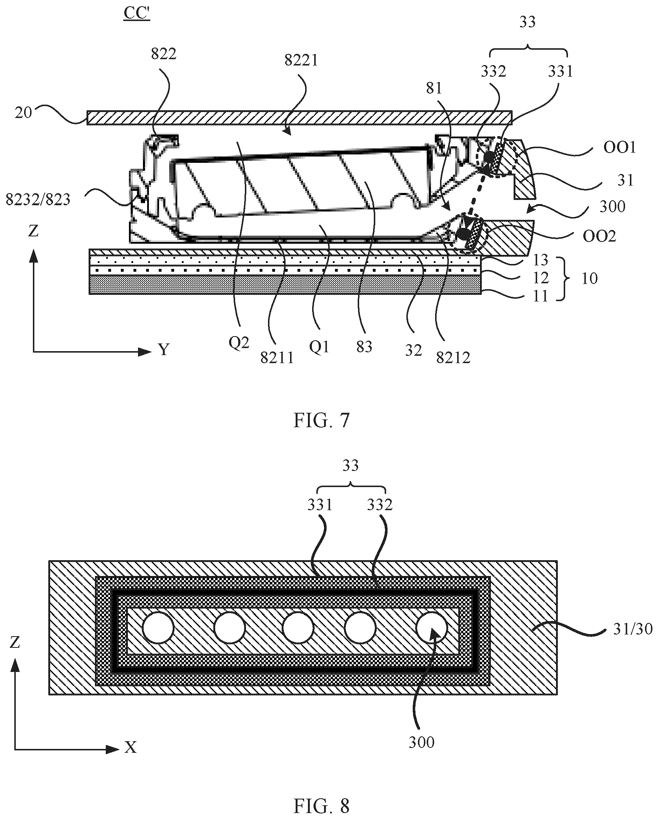

The middle frame 30 is located between the cover plate 11 and the rear cover 20. The middle frame 30 includes an annular exterior member 31 and a support member 32 that is located in the annular exterior member 31 and that is located between the display 12 and the rear cover 20. The cover plate 11, the annular exterior member 31, and the rear cover 20 may define an overall machine cavity. Structures such as the display 12, the main board 40, the auxiliary board 50, the FPC 60, the battery 70, and the speaker module 80 are located in the overall machine cavity, and the structures in the overall machine cavity are supported through the support member 32. For example, the display module 10 is arranged on the support member 32 through, for example, an adhesive layer (13 in FIG. 7), the speaker module 80 and the auxiliary board 50 are located on a side of the support member 32 facing away from the display 12, and the display 12, the speaker module 80, and the auxiliary board 50 are supported through the support member 32. The adhesive layer is an adhesive structure that can arrange the display 12 on the support member 32, for example, a back adhesive.

Along the Y-axis direction, the main board 40 and the auxiliary board 50 are arranged on two sides of the battery 70 respectively, and the FPC 60 passes through the battery 70 to electrically connect the main board 40 to the auxiliary board 50, to implement data and signal transmission between the main board 40 and the auxiliary board 50.

A control chip is integrated on the main board 40. For example, the control chip includes structures such as a system on chip (System on Chip, SoC) and an application processor (Application Processor, AP). For example, the SoC is integrated with, for example, a central processing unit (Central Processing Unit, CPU), a graphics processing unit (Graphic Processing Unit, GPU), and a modem (Modem).

An antenna radio frequency front end, a universal serial bus (Universal Serial Bus, USB) device, and the like are integrated on the auxiliary board 50.

The battery 70 is configured to supply power to, for example, the display 12, a device on the main board 40, a device on the auxiliary board 50, and the speaker module 80 in the mobile phone 100, to ensure normal operation of the mobile phone.

The speaker module 80 is configured to convert an audio signal such as music or speech into a sound, and can support a function of external audio playback. Along the Y-axis direction, the speaker module 80 is located on a side of the battery 70 facing away from the main board 40, that is, arranged adjacent to the auxiliary board 50 and electrically connected to the auxiliary board 50. In this case, the audio signal sent by the main board 40 is transmitted to the speaker module 80 through the FPC 60 and the auxiliary board 50, and is converted into a to-be-outputted sound through the speaker module 80. Specifically, the speaker module 80 has a sound output channel 81. Correspondingly, the middle frame 30 is provided with a sound output hole 300, which is in communication with the sound output channel 81. After being outputted through the sound output channel 81, the sound obtained through conversion by the speaker module 80 is further outputted out of the mobile phone 100 through the sound output hole 300.

It should be noted that, in FIG. 1 and FIG. 2, an example in which there is one speaker module 80 and the speaker module 80 is located on a side of the battery 70 facing away from the main board 40 is used for description. In another optional embodiment of this application, the speaker module 80 may alternatively be arranged adjacent to the main board 40 and electrically connected to the main board 40. In this case, the main board 40 sends an audio signal to the speaker module 80 electrically connected to the main board 40, and the speaker module 80 converts the audio signal into a sound to be outputted. Alternatively, a quantity of speaker modules 80 is greater than or equal to two, at least one speaker module 80 is arranged adjacent to the auxiliary board 50 and electrically connected to the auxiliary board 50, and at least one speaker module 80 is arranged adjacent to the main board 40 and electrically connected to the main board 40.

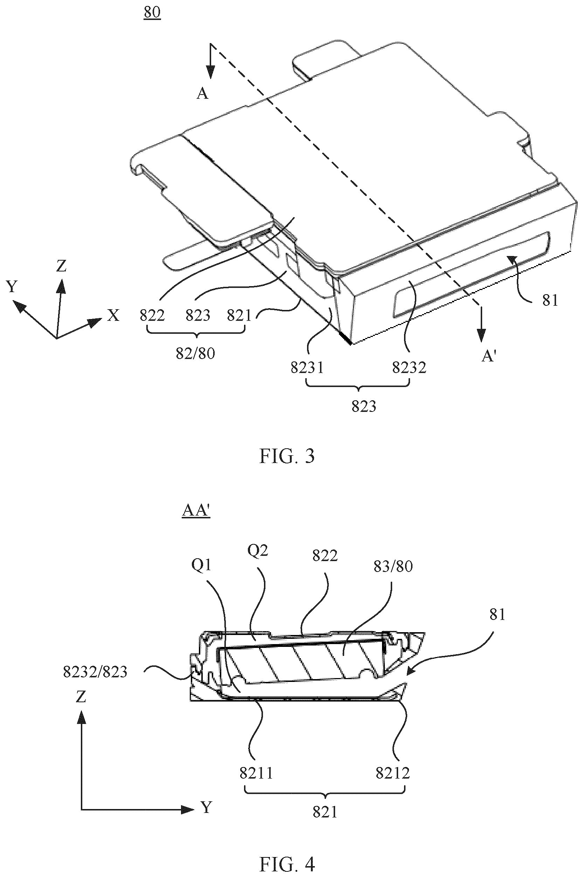

Refer to FIG. 3 and FIG. 4. FIG. 3 is a schematic diagram of a structure of a speaker module. FIG. 4 is a sectional view of the speaker module shown in FIG. 3 along a direction AA'. As shown in FIG. 3 and FIG. 4, the speaker module 80 includes a housing 82 and a core 83. Along the Z-axis direction, the housing 82 includes a front housing 821 and a rear housing 822 that are arranged opposite to each other, and the front housing 821 is located between the rear housing 822 and the display 12. The housing 82 further includes a side housing 823 connecting the front housing 821 to the rear housing 822. The side housing 823 is, for example, integrally formed with the front housing 821, and then assembled with the rear housing 822 to form the housing 82. In this way, difficulties of forming and assembling the housing 82 are reduced.

The front housing 821 includes a front cavity wall 8211 and an annular front cavity step 8212 arranged around the front cavity wall 8211. The annular front cavity step 8212 may be a plastic member, and the front cavity wall 8211 may be a metal member. For example, the front cavity wall 8211 is a stainless steel member. The front cavity wall 8211 and the annular front cavity step 8212 may be an integrated structure, that is, the front cavity wall 8211 and the annular front cavity step 8212 are integrally formed. For example, the annular front cavity step 8212 may be formed on the front cavity wall 8211 through an injection molding process. Alternatively, the front cavity wall 8211 may be arranged on the annular front cavity step 8212 through bonding, clamping, screws, or the like. The arrangement of the front cavity wall 8211 can improve overall structural strength of the front housing 821 without increasing the thickness of the front housing 821.

The side housing 823 includes two first side walls 8231 arranged opposite to each other along the X-axis direction and two second side walls 8232 arranged opposite to each other along the Y-axis direction. During assembly, the sound output channel 81 is formed between one of the second side walls 8232 and the annular front cavity step 8212. In this way, there is no need to separately arrange the sound output channel 81, so that assembly difficulty is reduced.

The front housing 821, the rear housing 822, and the side housing 823 define an accommodating cavity. The core 83 is arranged in the housing 82, and divides the accommodating cavity of the housing 82 into a front cavity Q1 and a rear cavity Q2. The front cavity Q1 is in communication with the sound output channel 81. A ventilation channel (not shown in the figure) enabling the core 83 to communicate with the rear cavity Q2 is provided between the core 83 and the rear cavity Q2, to implement ventilation between the core 83 and the rear cavity Q2.

The core 83 includes a support, a diaphragm system, a voice coil, and a magnetic circuit system. The diaphragm system includes a dome and a diaphragm. The core 83 separates the front cavity Q1 and the rear cavity Q2 of the speaker module 80 through the diaphragm system. The support is configured to support the diaphragm system and fix the magnetic circuit system. The magnetic circuit system is configured to cooperate with the voice coil to drive the diaphragm group to vibrate. The diaphragm system can drive air in the front cavity Q1 to vibrate. The air vibrating in the front cavity Q1 is guided out through the sound output channel 81, to form a sound. In addition, the sound is further guided out of the mobile phone 100 through the sound output hole 300 in communication with the sound output channel 81, to be received and heard by a user. A specific structure and working principle of the core 83 are similar to those in the existing technologies. For details, refer to the existing technologies. Details are not described herein again.

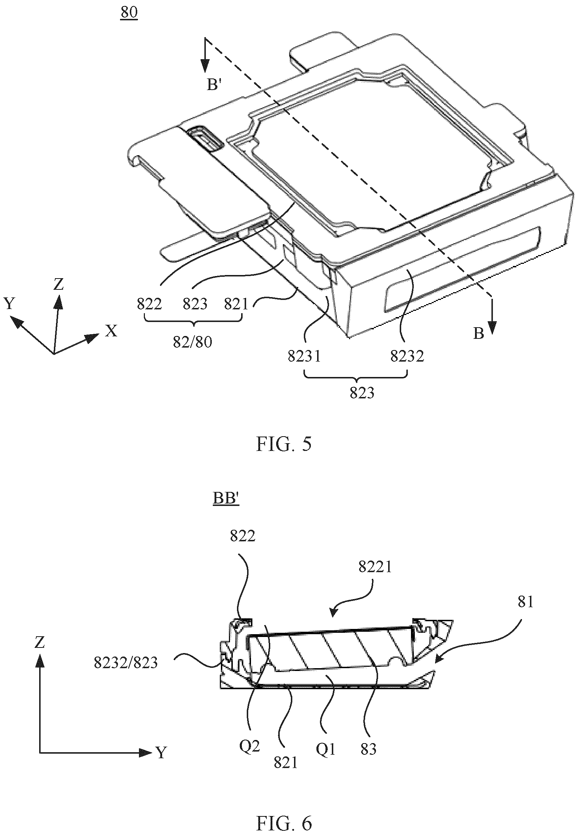

It should be noted that, in FIG. 3 and FIG. 4, an example in which the housing 82 is an independent housing structure is used for description, but does not constitute a limitation on this application. In another optional embodiment of this application, at least part of the housing 82 may be defined by other components of the electronic device. For example, refer to FIG. 5 and FIG. 6. FIG. 5 is a schematic diagram of a structure of another speaker module according to an embodiment of this application. FIG. 6 is a sectional view of the speaker module shown in FIG. 5 along a direction BB'. As shown in FIG. 5 and FIG. 6, to achieve a better audio effect such as stereo in limited architectural space of the electronic device, the speaker module may be used in an electronic device with an open sound cavity, that is, the overall machine cavity of the entire electronic device is used as the rear cavity of the speaker module, that is, a hollowed-out portion 8221 is formed on the rear housing 822. Alternatively, the rear housing 822 is directly omitted to enable the rear cavity Q2 of the speaker module 80 to communicate with the overall machine cavity.

It can be learned from the foregoing content that, the middle frame 30 is provided with the sound output hole 300 in communication with the sound output channel 81. After being outputted through the sound output channel 81, the sound obtained through conversion by the speaker module 80 is further outputted out of the mobile phone 100 through the sound output hole 300. However, in a process in which the sound is transmitted from the sound output channel 81 to the sound output hole 300, the sound may leak through a gap between the sound output channel 81 and the sound output hole 300.

Specifically, refer to FIG. 7 and FIG. 8. FIG. 7 is a sectional view of the electronic device shown in FIG. 1 along a direction CC'. FIG. 8 is a diagram of a positional relationship between an exterior member and a sealing support of a middle frame. As shown in FIG. 7 and FIG. 8, there is a gap between the exterior member 31 provided with the sound output hole 300 and the second side wall 8232 provided with the sound output channel 81, that is, an area OO1 in FIG. 7, and there is a gap between the exterior member 31 provided with the sound output hole 300 and the annular front cavity step 8212, that is, an area OO2 in FIG. 7. In a process in which the sound is outputted to the sound output hole 300 through the sound output channel 81, to avoid a case that the sound leaks through the gap between the exterior member 31 provided with the sound output hole 300 and the second side wall 8232 provided with the sound output channel 81 and the gap between the exterior member 31 provided with the sound output hole 300 and the annular front cavity step 8212 (a leaking path is indicated by a dashed arrow in FIG. 7), for example, after leaking, the front cavity Q1 is in air communication with the rear cavity Q2, phases of air in the front cavity Q1 and air in the rear cavity Q2 cancel, and the sound disappears, a sealing support 33 is further arranged on the middle frame 30. Along the Y-axis direction, the sealing support 33 is located between the exterior member 31 provided with the sound output hole 300 and the second side wall 8232 provided with the sound output channel 81, and is fixed to the exterior member 31. The sealing support 33 includes a support portion 331 and a sealing portion 332. The support portion 331 and the sealing portion 332 are both annular. Along the Y-axis direction, the annular sealing portion 332 is fixed to a side of the annular support portion 331 facing away from the exterior member 31. The support portion 331 and the sealing portion 332 are arranged in an annular shape, so that the sound output hole 300 can be exposed, to avoid blocking the sound output hole 300. After the speaker module 80 is assembled with the middle frame 30, the sealing support 33 is located on a side of the second side wall 8232 facing the exterior member 31, and the annular sealing portion 332 is arranged around the sound output channel 81, is located between the second side wall 8232 provided with the sound output channel 81 and the annular support portion 331, and is located between the annular front cavity step 8212 and the annular support portion 331. In other words, the area OO1 and the area OO2 in FIG. 7 are sealed, to prevent the sound from leaking through the gap between the exterior member 31 provided with the sound output hole 300 and the second side wall 8232 provided with the sound output channel 81 and the gap between the exterior member 31 provided with the sound output hole 300 and the annular front cavity step 8212.

For example, the support portion 331 includes, for example, hard plastic, to ensure a support effect on the sealing portion 332. The sealing portion 332 includes, for example, flexible adhesive, to ensure a sealing effect.

Currently, because of consumption requirements, the electronic device needs to be designed to be increasingly thin, that is, a size of the electronic device 100 along the Z-axis direction is increasingly small. To implement a lightening and thinning design of the electronic device, a thinner speaker module is required.

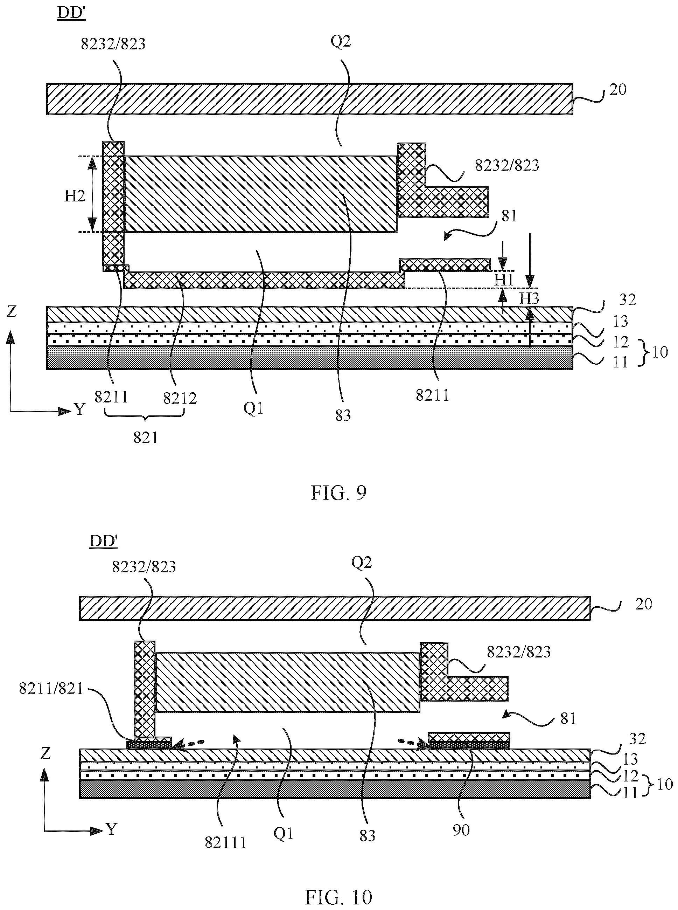

Refer to FIG. 9. FIG. 9 is a sectional view of the electronic device shown in FIG. 1 along a direction DD'. As shown in FIG. 9, the thickness (a size along the Z-axis direction) of the speaker module 80 mainly includes three parts: a thickness H1 of the front cavity wall 8211, a height H2 of the core 83, and an avoidance gap H3 between the front cavity wall 8211 and the support member 32 (to prevent the support member 32 from interfering with the front cavity wall 8211). However, thinning of the core 83 affects performance of the speaker module 80. When the thickness of the core 83 cannot be reduced, a design of the front cavity Q1 can be adjusted to implement the lightening and thinning design of the electronic device.

Specifically, refer to FIG. 10. FIG. 10 is another sectional view of the electronic device shown in FIG. 1 along a direction DD'. As shown in FIG. 10, the front housing 821 includes only the annular front cavity step 8212, that is, the front cavity wall 8211 is hollowed out to form a front cavity hole 82111, that is, the front cavity Q1 becomes an open front cavity. In some embodiments, a projection of the front cavity hole 82111 on a plane formed by the X-axis and the Y-axis overlaps with a projection of the diaphragm system of the core 83 on the plane formed by the X-axis and the Y-axis. In other words, a design of the front cavity hole 82111 may expose the diaphragm and the dome.

It should be noted that, that the projection of the front cavity hole 82111 on the plane formed by the X-axis and the Y-axis overlaps with that of the diaphragm system of the core 83 may be that the projection of the front cavity hole 82111 on the plane formed by the X-axis and the Y-axis partially overlaps with the projection of the diaphragm system of the core 83 on the plane formed by the X-axis and the Y-axis; or the projection of the front cavity hole 82111 on the plane formed by the X-axis and the Y-axis coincides with the projection of the diaphragm system of the core 83 on the plane formed by the X-axis and the Y-axis; or the projection of the diaphragm system of the core 83 on the plane formed by the X-axis and the Y-axis is located within the projection of the front cavity hole 82111 on the plane formed by the X-axis and the Y-axis. A meaning of overlapping involved in following embodiments is the same as this meaning. Details are not described in following embodiments again.

When the front cavity wall 8211 is hollowed out, along the Z-axis direction, the thickness H1 of the front cavity wall 8211 and the avoidance gap H3 between the front cavity wall 8211 and the support member 32 may be omitted. In this way, when the volume of the front cavity Q1 is ensured, the core 83 can be moved downward, and the size of the side housing 823 along the Z-axis direction is reduced, so that the rear cover 20 can be moved downward. Therefore, the lightening and thinning design of the electronic device is facilitated.

It should be noted that, that the core 83 is moved downward means that the core 83 is moved along a -Z direction in FIG. 10, and that the rear cover 20 is moved downward means that the rear cover 20 is moved along the -Z direction in FIG. 10. After downward moving, a vertical distance (along the Z-axis direction) between the rear cover 20 and the display 12 is shortened. Therefore, the lightening and thinning design of the electronic device is facilitated. A meaning of downward moving involved in following embodiments is the same as this meaning. Details are not described in following embodiments again.

Although the design of the open front cavity is beneficial to the lightening and thinning design of the electronic device, a sealing problem is also caused. In other words, if the sealing effect is poor, problems such as air communication between the front cavity Q1 and the rear cavity Q2, phase cancellation between the air in the front cavity Q1 and the air in the rear cavity Q2, sound disappearance, vibration of the display 12, and poor waterproofness of the overall machine are caused. Therefore, user experience is affected.

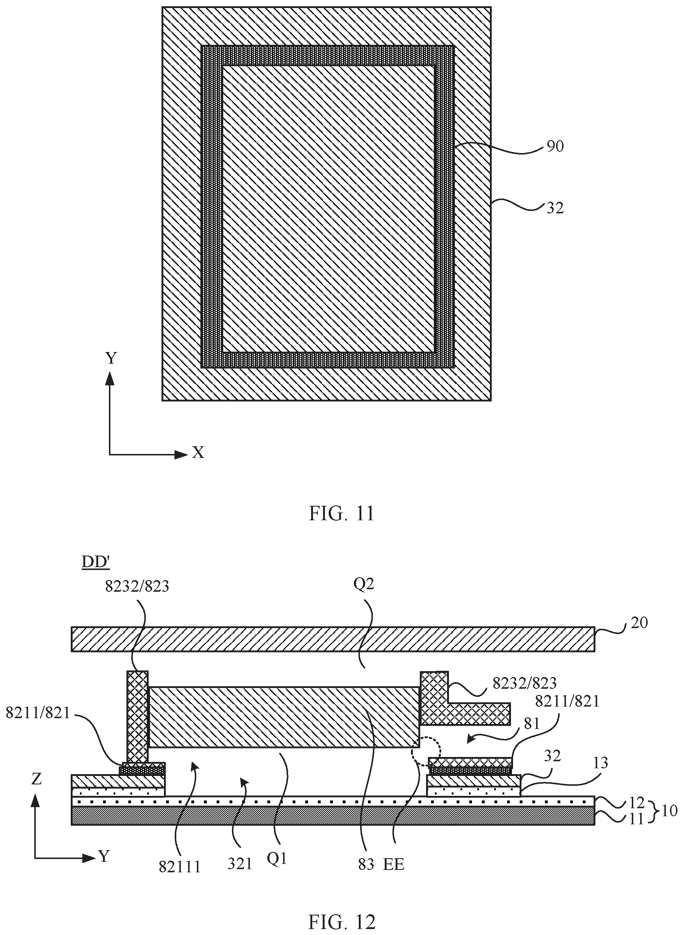

Based on this, refer to FIG. 11. FIG. 11 is a diagram of a positional relationship between a support member and a sealing member according to an embodiment of this application. As shown in FIG. 10 and FIG. 11, a first annular sealing member 90 is arranged between the support member 32 of the middle frame 30 and the annular front cavity step 8212. The arrangement of the first annular sealing member 90 can block the air in the front cavity Q1, to prevent the air in the front cavity Q1 from being transmitted to the rear cavity Q2 through a gap between the support member 32 and the annular front cavity step 8212 (a transmission path is indicated by a dashed arrow in FIG. 10).

A type of the first annular sealing member 90 is not limited in embodiments of this application, as long as the air can be prevented from passing through the gap between the support member 32 and the annular front cavity step 8212. For example, the first annular sealing member 90 is, for example, foam, foam adhesive, glue, or back adhesive.

To further reduce the thickness of the electronic device along the Z-axis direction, refer to FIG. 12. FIG. 12 is another sectional view of the electronic device shown in FIG. 1 along a direction DD'. As shown in FIG. 12, the support member 32 is provided with a support hole 321. The projection of the front cavity hole 82111 on the plane formed by the X-axis and the Y-axis overlaps with a projection of the support hole 321 on the plane formed by the X-axis and the Y-axis. Correspondingly, an adhesive layer 13 is also hollowed out.

The arrangement of the support hole 321 can further increase the volume of the front cavity Q1. In this way, when the volume of the front cavity Q1 is ensured, the core 83 can be further moved downward, the size of the side housing 823 along the Z-axis direction is reduced, and the rear cover 20 can be further moved downward. Therefore, the lightening and thinning design of the electronic device is facilitated. In addition, a gap between the display 12 and the support member 32 is sealed through the adhesive layer 13, to prevent the air in the front cavity Q1 from leaking through the gap between the display 12 and the support member 32, that is, the adhesive layer is reused as a sealing structure between the display 12 and the support member 32. In this way, there is no need to separately arrange a sealing structure, so that the structure is simplified, and costs are reduced. Certainly, a second annular sealing member may alternatively be separately arranged around an edge of the support hole 321. In other words, the second annular sealing member may be arranged separately, or the adhesive layer 13 may be reused as the second annular sealing member.

However, given that when the core 83 continues to be moved downward, interference is formed between the core 83 and the front cavity step 8212, that is, in an area EE shown in FIG. 12, a slot between the core 83 and the front cavity step 8212 is small, the air in the front cavity Q1 cannot be transmitted to the sound output hole 300 through the sound output channel 81.

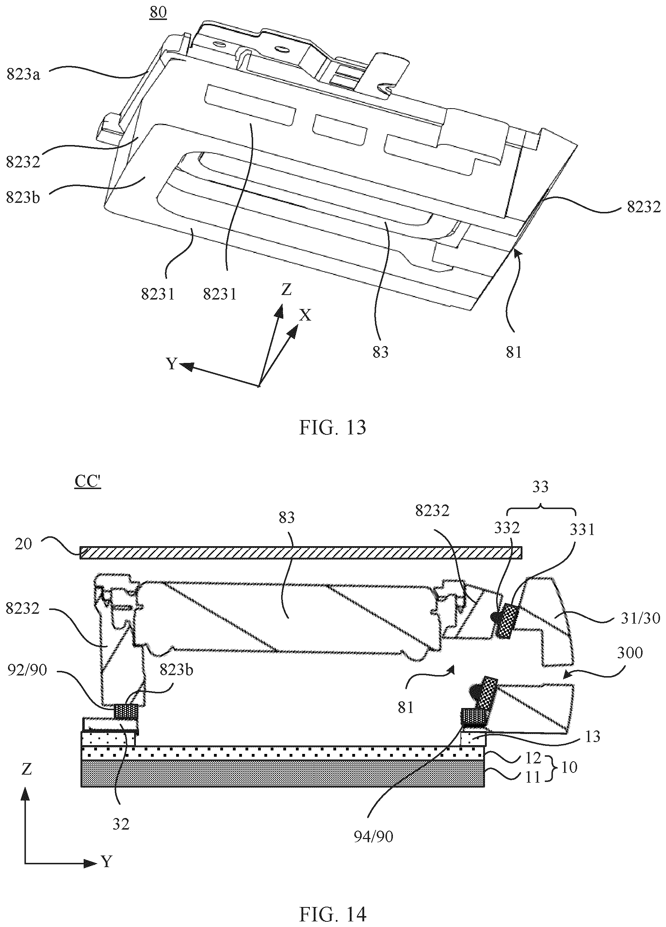

Based on this, refer to FIG. 13. FIG. 13 is a schematic diagram of a structure of still another speaker module according to an embodiment of this application. As shown in FIG. 13, the front cavity step 8212 of the speaker module 80 is also removed. To be specific, in this case, the speaker module 80 includes an annular side wall 823, and the core 83 is located in space defined by the annular side wall 823, and divides the space into the front cavity Q1 and the rear cavity Q2. In this arrangement, it is ensured that the thickness of the electronic device along the Z-axis direction is reduced, and interference between the core 83 and the front cavity step 8212 can be avoided.

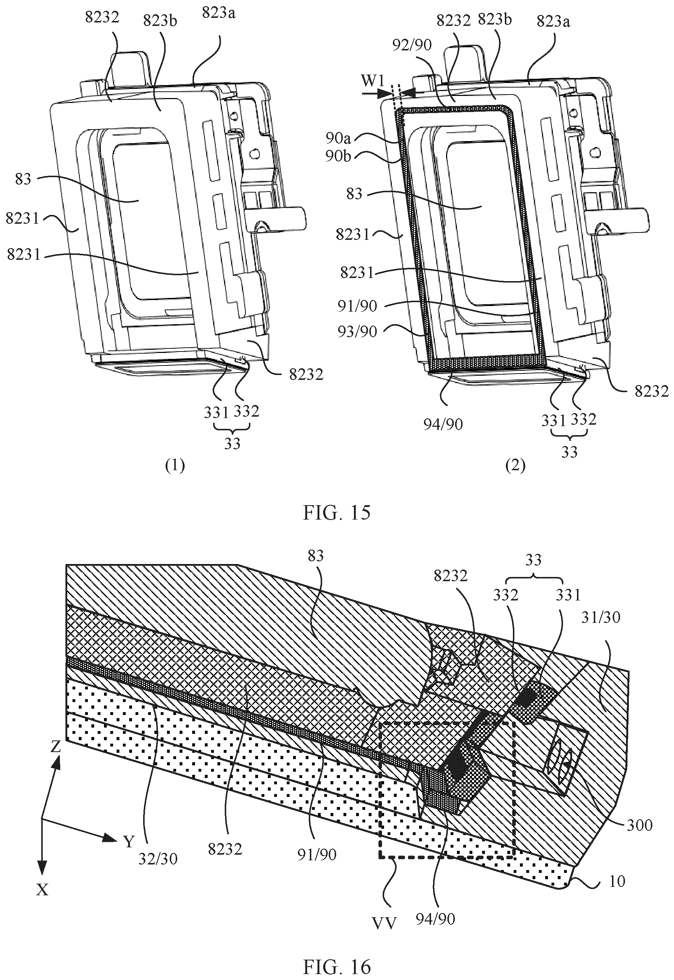

However, it can be learned from the foregoing content that, the first annular sealing member 90 is arranged between the front cavity step 8212 and the support member 32 of the middle frame 30. When the front cavity step 8212 is removed, the sealing effect becomes poorer. Therefore, when the front cavity step 8212 is removed, to ensure airtightness of the front cavity Q1, refer to FIG. 14 and FIG. 15. FIG. 14 is another sectional view of the electronic device shown in FIG. 1 along a direction DD'. FIG. 15 is a comparison diagram of a positional relationship between a speaker module, a sealing support, and a first annular sealing member. (1) of FIG. 15 is a schematic diagram of a structure in which the first annular sealing member is not arranged. (2) of FIG. 15 is a schematic diagram of a structure in which the first annular sealing member is arranged. As shown in FIG. 14 and FIG. 15, when the speaker module 80 does not include the front cavity step 8212, that is, when the speaker module 80 is the structure shown in FIG. 13, the first annular sealing member 90 may be arranged between the side housing 823 of the housing 82 and the support member 32 of the middle frame 30 and between the annular support portion 331 and the support member 32.

Specifically, the side housing 823 includes a first surface 823a and a second surface 823b oppositely arranged along the Z-axis direction. The first surface 823a is located on a side of the second surface 823b facing away from the display 12. The sound output channel 81 arranged on the second side wall 8232 provides a notch (as shown in FIG. 13) on the second surface 823b. The first annular sealing member 90 includes a first portion 91, a second portion 92, a third portion 93, and a fourth portion 94 that are continuous and connected end to end. The first portion 91 of the first annular sealing member 90 is arranged between the second surface 823b of one first side wall 8231 and the support member 32 of the middle frame 30, the second portion 92 of the first annular sealing member 90 is arranged between the second surface 823b of one second side wall 8232 (the second side wall 8232 on which the sound output channel 81 is not arranged) and the support member 32, the third portion 93 of the first annular sealing member 90 is arranged between the second surface 823b of the other first side wall 8231 and the support member 32 of the middle frame 30, and the fourth portion 94 of the first annular sealing member 90 is arranged between the second surface 823b of the other second side wall 8232 (the second side wall 8232 on which the sound output channel 81 is arranged) and the support member 32 and between the sealing support 331 and the support member 32, to complete sealing of a gap between the second surface 823b of the first side wall 8231 and the support member 32 of the middle frame 30, a gap between the second surface 823b of the second side wall 8232 and the support member 32, and a gap between the sealing support 331 and the support member 32. In this way, even if the front cavity step 8212 is removed, the front cavity Q1 can be sealed, to avoid problems including the phase cancellation between the air in the front cavity Q1 and the air in the rear cavity Q2 and the sound disappearance due to air communication between the front cavity Q1 and the rear cavity Q2. In addition, because the front cavity step 8212 is removed, the core 83 can continue to be moved downward, to further reduce the thickness of the electronic device along the Z-axis direction, thereby facilitating the lightening and thinning design of the electronic device.

In this case, the first annular sealing member 90 includes a first edge 90a and a second edge 90b. The second edge 90b is arranged around the first edge 90a. A distance between the first edge 90a and the second edge 90b is W1, and 0.8 mm≤W1≤2 mm. In other words, a width of the first annular sealing member 90 is between 0.8 mm and 2 mm. In this arrangement, neither a sealing effect is achieved because the width of the first annular sealing member 90 is small nor much space of the overall machine cavity is occupied because the width of the first annular sealing member 90 is large.

For example, the distance W1 between the first edge 90a and the second edge 90b is 0.8 mm, 1 mm, 1.2 mm, 1.4 mm, 1.6 mm, 1.8 mm, 2 mm, or the like.

It should be noted that, the removal of the front cavity step 8212 in the foregoing example is described by using an example on a premise that the support member 32 of the middle frame 30 is provided with the support hole 321, but does not constitute a limitation on this application. In another optional embodiment of this application, the front cavity step 8212 may alternatively be removed on a premise that the support member 32 of the middle frame 30 is not modified (that is, is not provided with the support hole 321).

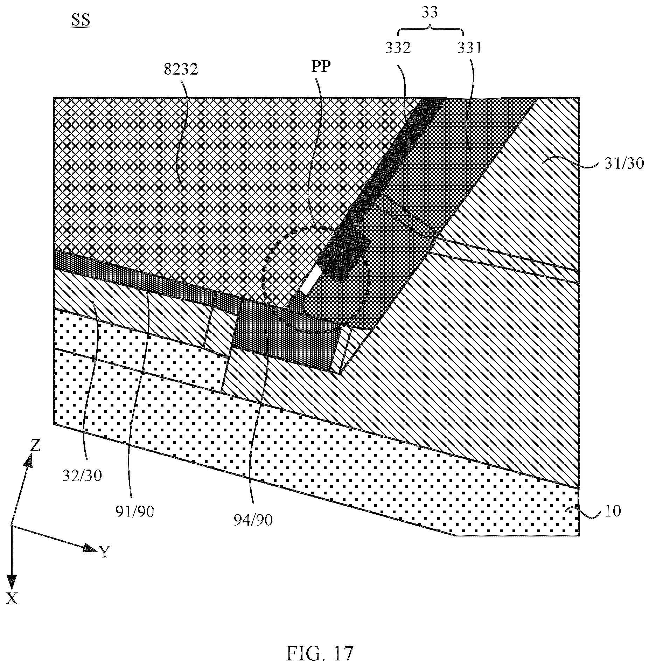

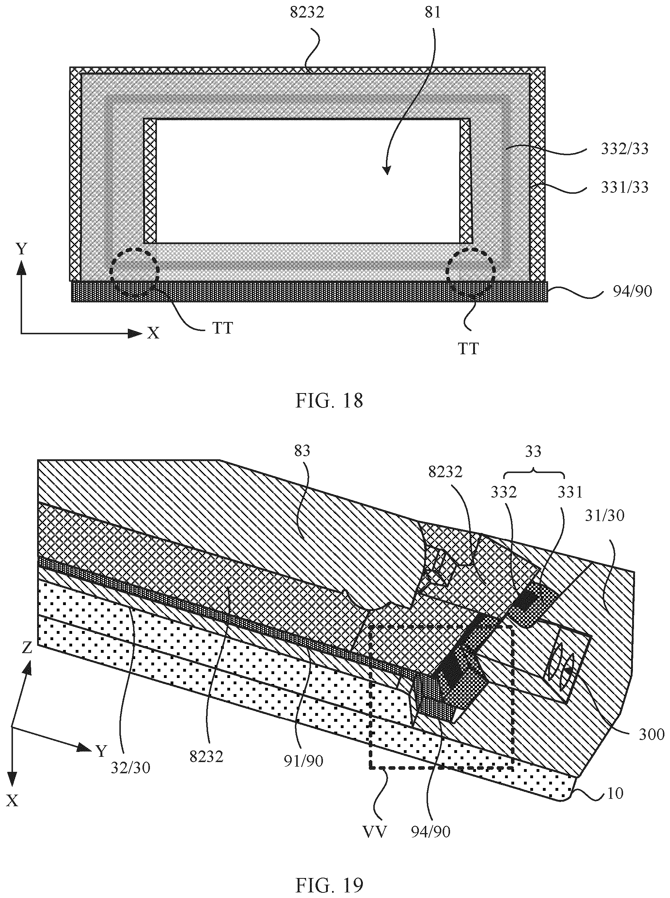

In this case, it is found through research that, referring to FIG. 16, FIG. 17, and FIG. 18, FIG. 16 is a diagram of a positional relationship between a middle frame, a sealing support, a first annular sealing member, a speaker module, and a display module according to an embodiment of this application, FIG. 17 is a partial enlarged view of an area SS in FIG. 16, and FIG. 18 is a diagram of a positional relationship between a second side wall, a fourth portion of a first annular sealing member, and a sealing support according to an embodiment of this application. As shown in FIG. 16, FIG. 17, and FIG. 18, because the annular sealing portion 332 has a specific thickness along the Y-axis direction, there are slots between the annular support portion 331, the second side wall 8232, the annular sealing portion 332, and the fourth portion 94 of the first annular sealing member 90, and there are two slots. Along the Y-axis direction, the two slots are located on two sides of the sound output channel 81, such as an area PP shown in FIG. 17 and an area TT shown in FIG. 18.

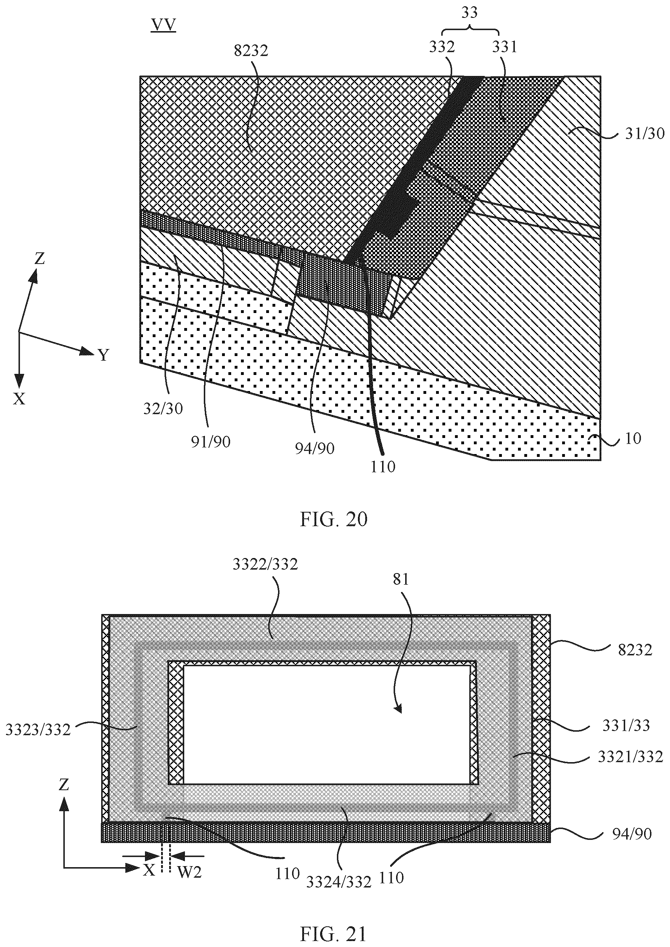

To prevent the gas in the front cavity Q1 from leaking into the overall machine cavity through the slot, referring to FIG. 19, FIG. 20, and FIG. 21, FIG. 19 is a diagram of another positional relationship between a middle frame, a sealing support, a speaker module, and a display module according to an embodiment of this application, FIG. 20 is a partially enlarged view of an area VV in FIG. 19, and FIG. 21 is a diagram of a positional relationship between a blocking structure, a second side wall, a fourth portion of a first annular sealing member, and a sealing support according to an embodiment of this application. As shown in FIG. 19, FIG. 20, and FIG. 21, the sealing portion 332 includes a first sealing sub-portion 3321, a second sealing sub-portion 3322, a third sealing sub-portion 3323, and a fourth sealing sub-portion 3324 connected end to end. The first sealing sub-portion 3321 and the third sealing sub-portion 3323 are arranged opposite to each other along the X-axis direction. The second sealing sub-portion 3322 and the fourth sealing sub-portion 3324 are arranged opposite to each other along the Z-axis direction. In addition, along the Z-axis direction, the second sealing sub-portion 3322 is located on a side of the fourth sealing sub-portion 3324 facing away from the fourth portion 94 of the first annular sealing member 90. A blocking structure 110 is arranged in each of two slots defined by the annular support portion 331, the second side wall 8232, the fourth sealing sub-portion 3324 of the sealing portion 332, and the fourth portion 94 of the first annular sealing member 90. To be specific, the blocking structure 110 has one surface in contact with the fourth sealing sub-portion 3324 of the sealing portion 332, one surface in contact with the second side wall 8232, and one surface in contact with the fourth portion 94 of the first annular sealing member 90. In addition, the blocking structure 110 is arranged with an overpressure, that is, when the blocking structure 110 is in contact with the fourth sealing sub-portion 3324 of the sealing portion 332, in contact with the second side wall 8232, and in contact with the fourth portion 94 of the first annular sealing member 90, there is no gap, and the blocking structure 110 can block the gas in the front cavity Q1 from being transmitted to the overall machine cavity through the slot. Therefore, the sealing effect is further ensured.

In this case, a width W2 of the blocking structure 110 along the X-axis direction is greater than or equal to 0.6 mm and less than or equal to 2 mm. In this arrangement, neither the sealing effect is achieved because the width of the blocking structure 110 is small nor much space of the overall machine cavity is occupied because the width of the blocking structure 110 is large.

For example, the width W2 of the blocking structure 110 along the X-axis direction is 0.6 mm, 0.8 mm, 1 mm, 1.2 mm, 1.4 mm, 1.6 mm, 1.8 mm, 2 mm, or the like. A type of the blocking structure 110 is not limited in embodiments of this application. A person skilled in this art may select a type based on actual situations. For example, the blocking structure 110 may be, for example, dispensed adhesive or flexible adhesive.

In this case, still referring to FIG. 21, the blocking structure 110 and the annular sealing portion 332 are integrally formed. In this arrangement, when the annular sealing portion 332 is prepared, the blocking structure 110 is prepared. There is no need to separately prepare the blocking structure 110. Therefore, process steps are simplified, and costs are reduced. In addition, it can be ensured that there is no gap between the blocking structure 110 and the annular sealing portion 332, so that the sealing effect is further ensured.

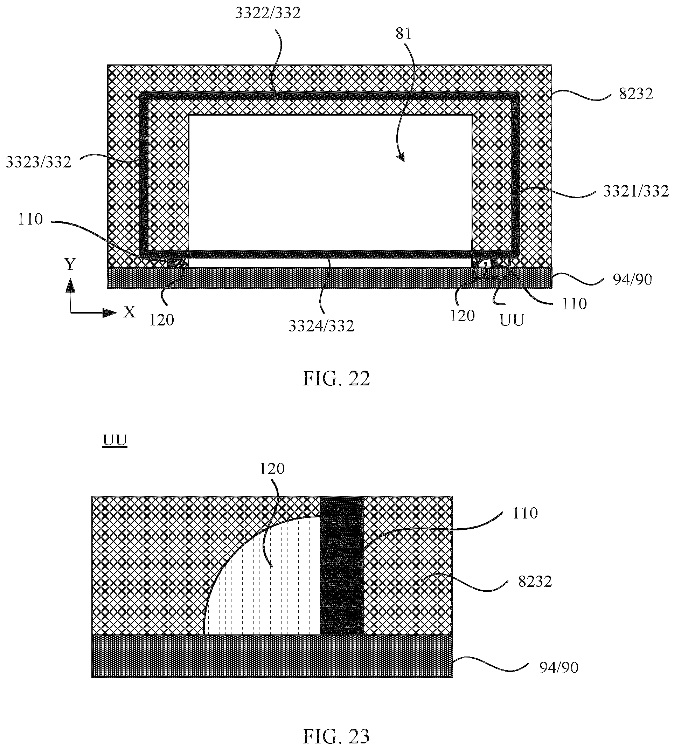

To further improve the sealing effect and prevent the air in the front cavity Q1 from being transmitted to the overall machine cavity through the gap between the blocking structure 110 and the fourth portion 94 of the first annular sealing member 90, referring to FIG. 22 and FIG. 23, FIG. 22 is a diagram of a positional relationship between a blocking structure, a second side wall, a fourth portion of a first annular sealing member, a sealing portion, and an auxiliary structure according to an embodiment of this application, and FIG. 23 is an enlarged view of an area UU in FIG. 22. As shown in FIG. 22 and FIG. 23, an auxiliary structure 120 is arranged in an area at which the blocking structure 110 is connected to the fourth portion 94 of the first annular sealing member 90. The auxiliary structure 120 is configured to block the area at which the blocking structure 110 is connected to the fourth portion 94 of the first annular sealing member 90. The area at which the blocking structure 110 is connected to the fourth portion 94 of the first annular sealing member 90 is sealed through the auxiliary structure 120.

A type of the auxiliary structure 120 is not limited in embodiments of this application. A person skilled in this art may select a type based on actual situations. For example, the auxiliary structure 120 includes silica gel, UV adhesive, or the like. For example, adhesive dispensing may be performed at the area at which the blocking structure 110 is connected to the fourth portion 94 of the first annular sealing member 90, to form the auxiliary structure 120.

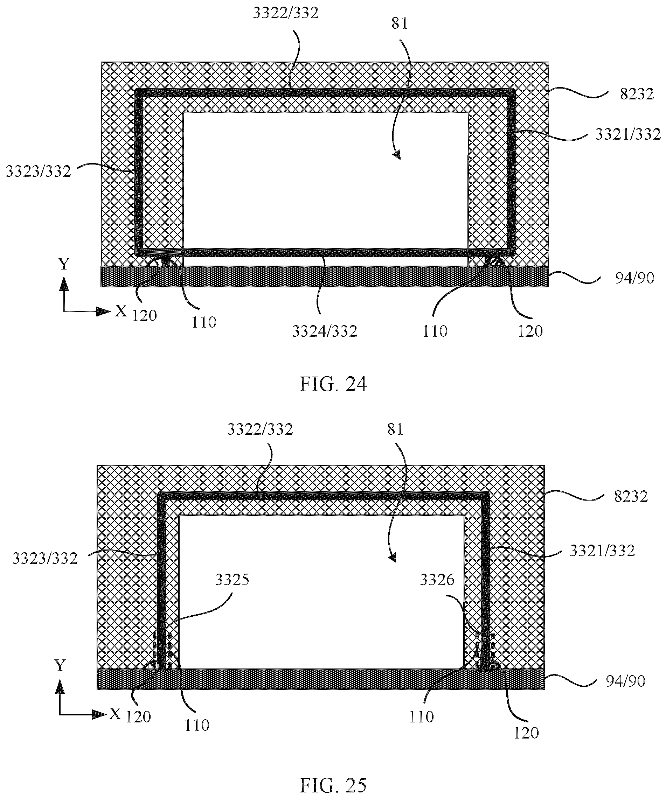

It should be noted that, the foregoing example is described by using an example in which the auxiliary structure 120 is located in the front cavity Q1, but does not constitute a limitation on this application. In another optional embodiment of this application, refer to FIG. 24. FIG. 24 is a diagram of another positional relationship between a blocking structure, a second side wall, a fourth portion of a first annular sealing member, a sealing portion, and an auxiliary structure according to an embodiment of this application. As shown in FIG. 24, the auxiliary structure 120 is arranged in the area at which the blocking structure 110 is connected to the fourth portion 94 of the first annular sealing member 90, and the auxiliary structure 120 is located outside the front cavity Q1. When the auxiliary structure 120 is arranged outside the front cavity Q1, arrangement of the auxiliary structure 120 is facilitated, and process steps are simplified.

In addition, it can be learned from FIG. 21, FIG. 22, and FIG. 24 that, when the blocking structure 110 is arranged in two slots defined by the annular support portion 331, the second side wall 8232, the fourth sealing sub-portion 3324 of the sealing portion 332, and the fourth portion 94 of the first annular sealing member 90, the blocking structure 110, the fourth portion 94 of the first annular sealing member 90, the first sealing sub-portion 3321 of the sealing portion 332, the second sealing sub-portion 3322, the third sealing sub-portion 3323, the support portion 331, and the second side wall 8232 may form a sealed cavity, and the fourth sealing sub-portion 3324 does not need to be arranged. In other words, refer to FIG. 25. FIG. 25 is a diagram of still another positional relationship between a blocking structure, a second side wall, a fourth portion of a first annular sealing member, a sealing portion, and an auxiliary structure according to an embodiment of this application. The annular sealing portion 332 has an opening. The opening has two opposite ends, that is, a first end portion 3325 and a second end portion 3326. In one slot, the blocking structure 110 has one end connected to the first end portion 3325 and the other end in contact with the fourth portion 94 of the first annular sealing member 90. In the other slot, the blocking structure 110 has connected to the second end portion 3325 and the other end in contact with the fourth portion 94 of the first annular sealing member 90. For example, the first sealing sub-portion 3321, the second sealing sub-portion 3322, the third sealing sub-portion 3323, and the blocking structure 110 are in a "U" shape. Two endpoints of the "U" shape are in contact with the fourth portion 94 of the first annular sealing member 90 respectively, to complete sealing. In this way, a structure of the sealing portion 332 is simple, materials can be saved, and costs can be reduced.

The foregoing descriptions and embodiments are merely intended to describe the technical solutions of this application, rather than limit this application. Although this application is described in detail with reference to foregoing embodiments, a person of ordinary skill in the art should understand that modifications can still be made to the technical solutions described in foregoing embodiments or equivalent replacements can be made to some technical features thereof, without departing from the scope of the technical solutions of embodiments of this application.

## Claims

1. An electronic device, comprising:
a middle frame, comprising an exterior member and a support member, wherein the exterior member is annular, the support member is located in the exterior member, and the exterior member is provided with a sound output hole;
a display module and a rear cover, wherein the support member is located between the display module and the rear cover, and the display module, the exterior member of the middle frame, and the rear cover define an overall machine cavity;
a speaker module, located in the overall machine cavity and located on a side of the support member facing away from the display module, wherein the speaker module comprises a side housing and a core, and the core is located in the side housing and divides an area defined by the side housing into a front cavity and a rear cavity; the side housing comprises a first surface and a second surface opposite to each other, the side housing is provided with a sound output channel, the sound output channel enables the front cavity to communicate with the sound output hole, and the sound output channel provides a notch on the second surface;
a sealing support, located at a gap between the exterior member and the side housing, wherein the sealing support is located on a side of the side housing facing the exterior member, and the sealing support exposes the sound output channel; and
a first annular sealing member, located between the second surface of the side housing and the support member and between the sealing support and the support member, wherein
the front cavity is defined by at least the core, the side housing, the support member, the sealing support, and the first annular sealing member.

2. The electronic device according to claim 1, wherein the sealing support comprises a support portion and a sealing portion, the support portion and the sealing portion are both annular, and the sealing portion is fixed to a side of the support portion facing away from the exterior member.

3. The electronic device according to claim 2, wherein the electronic device further comprises a blocking structure located in a slot defined by the support portion, the side housing, the sealing portion, and the first annular sealing member.

4. The electronic device according to claim 3, wherein when the sealing support comprises the support portion and the sealing portion, the blocking structure and the sealing portion are integrally formed.

5. The electronic device according to claim 3, wherein the blocking structure is strip-shaped, and along a first direction, two opposite ends of the strip-shaped blocking structure are in contact with the sealing portion and the first annular sealing member respectively, and the first direction is perpendicular to a plane on which the support member is located; and
along a second direction, two opposite surfaces of the strip-shaped blocking structure are in contact with the side housing and the support portion respectively, and the second direction is perpendicular to the first direction.

6. The electronic device according to claim 3, wherein the sealing portion has an opening, the sealing portion comprises a first end portion and a second end portion located on two sides of the opening, and the blocking structure is located between the first end portion and the first annular sealing member and between the second end portion and the first annular sealing member.

7. The electronic device according to claim 6, wherein the sealing portion and the blocking structure are in a "U" shape.

8. The electronic device according to any one of claims 3 to 7, wherein a width of the blocking structure along a third direction is greater than or equal to 0.6 mm and less than or equal to 2 mm; and
the third direction is perpendicular to the first direction, and the first direction is perpendicular to the plane on which the support member is located.

9. The electronic device according to any one of claims 3 to 7, wherein the blocking structure comprises dispensed adhesive or flexible adhesive.

10. The electronic device according to claim 9, wherein when the blocking structure comprises the flexible adhesive, and the blocking structure is located in the slot defined by the support portion, the side housing, the sealing portion, and the first annular sealing member, no gap exists between the blocking structure and the support portion, between the blocking structure and the side housing, between the blocking structure and the sealing portion, and between the blocking structure and the first annular sealing member.

11. The electronic device according to any one of claims 3 to 7, wherein an area at which the blocking structure is connected to the first annular sealing member is provided with an auxiliary structure, and the auxiliary structure is configured to block the area at which the blocking structure is connected to the first annular sealing member.

12. The electronic device according to claim 11, wherein the auxiliary structure comprises silica gel or UV adhesive.

13. The electronic device according to claim 11, wherein the auxiliary structure is formed through an adhesive dispensing process.

14. The electronic device according to claim 11, wherein the auxiliary structure is located outside the front cavity.

15. The electronic device according to claim 1, wherein the support member is provided with a support hole, and an orthographic projection of the support hole on a plane on which the support member is located overlaps with an orthographic projection of the core on the plane on which the support member is located; and
the electronic device further comprises a second annular sealing member, wherein the second annular sealing member is located between the support member and the display module, and is arranged around an edge of the support hole.

16. The electronic device according to claim 15, wherein the display module is arranged on the support member through an adhesive layer, and the adhesive layer is the second annular sealing member.

17. The electronic device according to claim 1, wherein the rear cavity is in communication with the overall machine cavity.

18. The electronic device according to claim 1, wherein the first annular sealing member comprises a first edge and a second edge, the second edge is arranged around the first edge, a distance between the first edge and the second edge is W1, and 0.8 mm≤W1≤2 mm.

19. The electronic device according to claim 1, wherein the first annular sealing member comprises foam, foam adhesive, glue, or back adhesive.
